(19)

Europäisches Patentamt
European Patent Office
Office européen des brevets

(11) **EP 3 798 334 A1**

(12) **EUROPEAN PATENT APPLICATION**

(43) Date of publication:
31.03.2021  Bulletin 2021/13

(51) Int Cl.:
*C25B 1/04* (2021.01)      *C25B 11/04* (2021.01)

(21) Application number: **19199561.2**

(22) Date of filing: **25.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.**
**80539 München (DE)**

(72) Inventors:
• **LI, Guowei**
**01069 Dresden (DE)**
• **FELSER, Claudia**
**06118 Halle (DE)**

(74) Representative: **Schweitzer, Klaus**
**Plate Schweitzer Zounek**
**Patentanwälte**
**Rheingaustrasse 196**
**65203 Wiesbaden (DE)**

(54)   **A PROCESS FOR ENHANCING THE CATALYTIC EFFICIENCY OF OER**

(57)    The present invention relates to a process for enhancing the catalytic efficiency of a catalyst for the oxygen evolution reaction (OER), comprising exposing the catalyst to an external magnetic field of between $65 \times 10^{-6}$ mT and $\leq 200$ mT during the oxygen evolution reaction, wherein the catalyst is a material which exhibits an increased Berry phase induced by the exposure of the catalyst to the external magnetic field.

Figure 4

EP 3 798 334 A1

**Description**

**FIELD OF THE INVENTION**

The present invention pertains to the technical field of electrochemical water oxidation. More particularly, the present invention pertains to the improvement of the oxygen evolution reaction (OER) with a catalyst which exhibits an increased Berry phase induced by the exposure of the catalyst to a low external magnetic field.

**BACKGROUND**

$H_2$ production from electrocatalytic water splitting has been widely viewed as a promising solution to the problems of climate change and fossil fuel depletion. There have been many extensive studies on the hydrogen evolution reaction (HER) occurring at the cathode side. However, the $O_2$ evolution reaction (OER) on the anode is a kinetically sluggish process that evolves a multistep proton-coupled electron transfer. This needs a large overpotential and is believed to be the bottleneck for commercial electrochemical water splitting.

Strategies within the framework of nano-engineering (nano-structured catalysts) could significantly increase the activity rate through the increase of active surface areas, enhancing mass and electron transport, and improving electrochemical stabilities. Unfortunately, the high complexity of these nano-structured catalysts makes the understanding of OER mechanism and the catalytic process a great challenge. Moreover, noble metals and their oxides such as Ir and $IrO_2$ are the state-of-the-art catalysts. High-efficient OER electrocatalysts based on cheaper elements are highly desired.

KR101566458B1 describes a solution by increasing the surface roughness of the nickel catalyst. Oxygen generation reaction efficiency can be increased because of the fast bubble detachment. However, the inventors found that a magnetic field is not effective in reducing the voltage drop.

CN105256331B discloses the use of magnetic coupling to control the movement of the oxygen bubbles in an electrolytic apparatus using magnetic coupling control movement of the oxygen bubbles. Oxygen bubbles in the electrolysis apparatus move to different directions depending on the magnetic poles applied on the anode. This reference does not disclose the alteration of oxygen evolution efficiency.

US7632390B2 relates to the electropolishing of metals in the presence of an external magnetic field. It is disclosed that when the electropolishing is maintained under oxygen evolution regime, a reduced microroughness and better surface wetting of the working piece can be obtained. An influence of magnetic field on the oxygen evolution kinetics is not disclosed.

Nobuko I. Wakayama, Tatsuhiro Okada, Jun-ichi Okano and Takeo Ozawa (Jpn. J. Appl. Phys. 2011, 40, L269-271) report that the oxygen reduction reaction can be promoted on a Pt catalyst when a magnetic field of larger than 400 mT is applied to the electrode. They only studied the effect on Pt catalyst in $H_2SO_4$ solution.

Christiane Niether, Stéphane Faure, Alexis Bordet, Jonathan Deseure, and Marian Chatenet (Nat. Energy, 2018, 3, 476-483) studied the water splitting reaction in an external high-frequency alternating magnetic field. The authors observed a decrease in overpotential for both hydrogen evolution and oxygen evolution reactions. They found that the increase in activity is caused by the increasing local temperature of the electrocatalysts.

Felipe A. Garcés-Pinedal, Marta Blasco-Ahicart, David Nieto-Castro, Núria López, and Jose Ramón Galán-Mascarós (Nat. Energy, 2019, 4, 519-525) investigated the oxygen evolution reaction when a magnetic field of about 400 mT is applied to the anode. They observed enhanced OER efficiency on certain ferromagnetic metal oxides.

**OBJECT OF THE INVENTION**

It is an object of the present invention to enhance the efficiency of the Oxygen Evolution Reaction (OER) in the water splitting process.

**SUMMARY OF THE INVENTION**

The present inventors found that by applying a relatively small constant external magnetic field, the OER catalytic efficiency of certain OER electrocatalysts can be increased significantly. "Applying an external magnetic field" means in the proximity of a permanent or electromagnet, such that the catalytic material experiences a constant magnetic field of the indicated magnitude. The electrochemical cell of the present invention comprises a cathode, an anodic working electrode with OER catalysts, and a constant external magnetic field that surrounds the cell and the anodic working electrode. The magnetic field needed for increasing the catalytic efficiency is larger than the average magnetic field of the earth (which is about $65 \times 10^{-6}$ mT) but $\leq 200$ mT, preferably $\leq 100$ mT and more preferred $\leq 50$ mT. The Magnet can be a permanent magnet or an electromagnet. "Certain OER electrocatalysts" means a catalyst which exhibits an increased Berry phase induced by the exposure of the catalyst to a low external magnetic field.

In a preferred embodiment of the present invention the OER catalyst is a metal with non-zero Berry phase which is more preferably selected from the group consisting of Co, Cr, Mn, Ni, and Fe, more preferably Fe, Co or Ni.

In a further preferred embodiment of the present invention the material is an alloy selected from the group consisting of an intermetallic compound selected from a group consisting of two or more elemental metals of defined proportions which have a non-zero Berry phase; more preferably the alloy is a Heusler alloy.

In a further preferred embodiment of the present invention the material is an oxide, sulphide, or carbide selected from a group consisting of a compound comprising oxygen, sulphur, or carbon, and one or more metallic element(s), wherein these oxides, sulphides, or carbides have a non-zero Berry phase.

## BRIEF DESCRIPTION OF THE DRAWINGS

The accompanying drawings are included to provide a further understanding of the present invention. The drawings illustrate exemplary embodiments of the present invention and, together with the description, serve to explain the principles of the present invention.

Figure 1 shows an exemplary experimental set-up of an electrochemical cell for OER in the presence of a constant external magnetic field.

Figure 2 shows the distance depended magnetic field strength of the used magnet. The distance is measured between the indicated catalyst and the magnet.

Figure 3 shows linear sweep voltammogram (LSV) OER curves of Ni foam with and without the application of an external magnetic field.

Figure 4 shows the linear LSV curves of Ni foam with and without the application of the external magnetic field.

Figure 5 shows the Galvanostatic (constant potential) measurement of electrochemical activity of Ni foam with and without an external magnetic field.

Figure 6 shows the distance-dependent Galvanostatic (constant potential) electrochemical activity of Ni foam in the presence of external magnetic field.

Figure 7 shows the long-time stability performance of Ni foam with an magnetic field.

Figure 8 shows the magnetic field lines with reference to the surface of the catalyst plate; on the left side the field lines are oriented perpendicular to the plate face of the catalyst (=preferred embodiment) and on the right side the field lines are oriented parallel to the plate face of the catalyst.

## DETAILED DESCRIPTION OF THE INVENTION

The present invention provides a simple method to increase the activity of OER catalyst through an increase of the Berry phase induced by the presence of a constant magnetic field that is larger than the average magnetic field of the earth (which is about $65 \times 10^{-6}$ mT). It was found that the catalytic activity of electrocatalysts can be increased with only a small magnetic field of $\leq 200$ mT. This enhancement of OER catalytic efficiency under a small constant magnetic field occurs in OER catalysts which exhibits an increased Berry phase induced by the exposure of the catalyst to the low external magnetic field that is larger than the average magnetic field of the earth (which is about $65 \times 10\text{-}6$ mT). It is possible to tailor the Berry phase and as a consequence to enhance the OER activity.

Berry phase is a quantity that describes the accumulation of a phase (or phase shift) when a vector is carried around a closed loop in a complex vector space. Recent studies confirmed that the existence of a Berry phase can influence the Hall effect in materials. The appearance of an anomalous Hall effect and a topological Hall effect is strongly dependent on the Berry phase of the given material.

In the presence of a magnetic field, one can tailor (tune) the value and/or the sign of the Berry phase. The macroscopic effect that goes along with the magnetic field exposure is a change of the anomalous Hall effect. This means that one can control the transport of electrons including their spin by altering the Berry phase.

Some materials exhibit a non-zero Berry phase outside (or without) a magnetic field; these are certain metals, metal oxides, metal sulphides, and alloys, specifically Heusler alloys. These materials are also potential catalysts for the oxygen evolution reaction because the OER process requires the transfer of electrons with their two basic properties:

electric charge and spin; and electrons have vector characteristics, which can lead to a non-zero Berry phase.

The Berry phase of a material can be calculated based on the tight-binding model Hamiltonian:

$$\sigma_{xy}^{z} = (1/2\pi)^{1/3} \int d\vec{k} \sum_{E(n,\vec{k}) < E_F} f(n,\vec{k})\, \Omega_{n,\ xy}^{z}(\vec{k})$$

$$\Omega_{n,\ xy}^{z}(\vec{k}) = 2\mathrm{Im} \sum_{n' \neq n} \frac{\langle n,\vec{k}|\hat{v}_x| n',\vec{k} \rangle \langle |\hat{v}_y| n',\vec{k}\rangle}{\left[E\left(n,\vec{k}\right) - E\left(n',\vec{k}\right)\right]^2}$$

where $\sigma$ is the Berry phase, $\Omega$ is the Berry curvature, $f(n,\vec{k})$ is the Fermi-Dirac distribution, $E(n,\vec{k})$ is the eigenvalue of the $n$th or $n$'th eigenstate of $u(n,\vec{k})$ at $(\vec{k})$ point, $E_F$ is the velocity operator, and Im is the imaginary (Im) part of the Berry phase. An external magnetic field can change the Hamiltonian of the system and consequently the Berry phase.

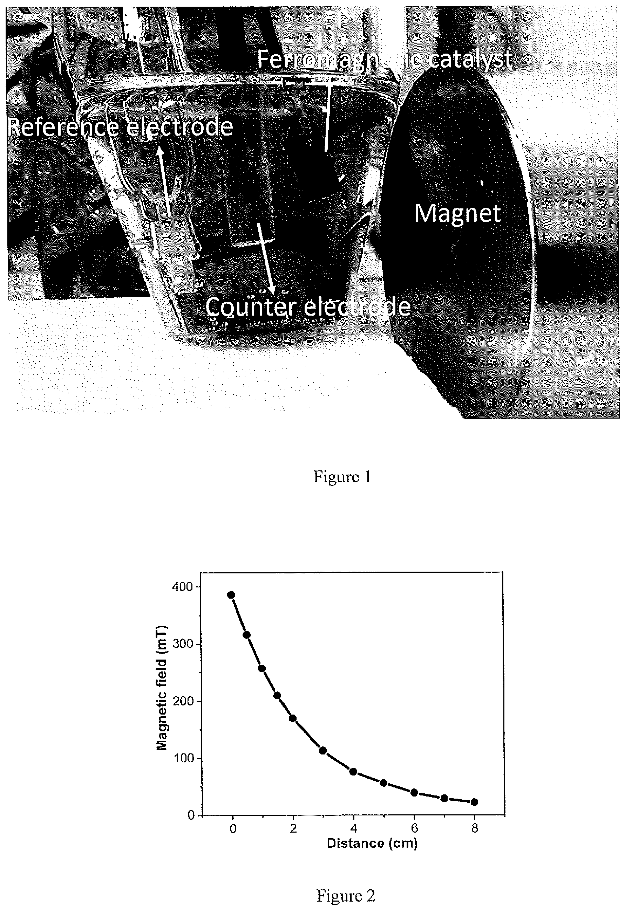

An experimental set-up of an OER electrolysis cell is shown in Figure 1. The electrochemical cell comprises within a vessel a graphite cathode, a reference electrode, and a working electrode (anode) made of a catalytic material. In the proximity of the vessel a permanent magnet is located which creates a constant magnetic field of substantially homogeneous strength across the catalyst. In the set-up of Figure 1 a disc magnet is shown, but a constant electromagnet can also be used. The magnetic strength which is exerted on the catalyst can be varied by changing the distance between the magnet and the catalyst.

The OER process is an oxidation reaction that occurs at the anode side of the electrochemical cell. It involves the formation of chemical bonds between the active sites of the electrocatalyst and the adsorbates. An electron transfer process concludes the oxidation reaction. The OER reaction kinetics strongly depends on the bond strength. A high bond strength results in strong adsorption of reaction intermediates, while a low bond strength leads to low coverage of the electrode surface with reactants. Both situations result in slow OER kinetics.

For transition metals, the octahedral splitting of the $d$ orbitals results in the formation of a lower energy $t_{2g}$ triplet and a higher energy $e_g$ doublet. In the oxygen evolution process, the $e_g$ orbitals participate in $\sigma$-bonding with the oxygen-containing adsorbates at the surface of the catalyst. Thus, the filling of $e_g$ orbitals has a strong influence on the binding energy of the OER intermediates and, thus, on the OER catalytic activity.

The OER process on the catalyst surfaces involves the combination of two oxygen atoms at the active sites. Each of the oxygen atom carries an electron with specified spin orientation. According to the molecular orbital theory, two-unpaired electrons in the oxygen molecular orbital (MO) occupy the antibonding orbitals; these electrons are parallelly aligned. This is the reason why oxygen exhibits paramagnetic behavior at room temperature. In the presence of an external magnetic field, the electrons on the two O atoms are likely to be parallelly orientated. This favours the formation of oxygen molecules within the framework of molecular orbital theory.

An important reason for a low catalytic efficiency in OER is the formation of side products like $H_2O_2$. Generally, the OER process can be described as follows:

$$H_2O + * \leftrightarrow HO^* + H^+ + e^- \qquad (1)$$

$$HO^* \leftrightarrow O^* + H^+ + e^- \qquad (2)$$

where HO* is a reaction intermediate and O* is the adsorbed oxygen atom at the metal active site. In the next step, two O* atoms are combined and lead to the formation of molecular oxygen. However, two HO* radicals may also be combined before the formation of the oxygen radical, leading to $H_2O_2$ as a side product. A parallel electron alignment indicates a difficult combination and, thus, slower OER kinetics because of the spin-selection rule ($\Delta S = 0$ or $\Delta M^S = 0$; $M^S = 2S+1$; $S = \Sigma s = n/2$). While an anti-parallel alignment suggests an easier combination and faster OER process.

The formation of $H_2O_2$ is a result of the random spin on the HO* intermediate. Without the interference of an external magnetic field, the HO* radical carries arbitrary spins with 50 % up and 50 % down. Thus, there is a high probability for the formation of $H_2O_2$ in case of anti-parallel spin alignment on HO*. Accordingly, if one can align the spin orientation of HO* (in the same direction), the formation of $H_2O_2$ as a side product can be depressed and more oxygen radicals can be produced. Based on the above concept, the inventors predicted that the combination of a non-zero Berry phase and an external magnetic field may control the spin direction of the OER reaction intermediate, and thus increase the OER efficiency.

Also, it was found that the direction of the magnetic field which is applied to the catalyst is also of importance.

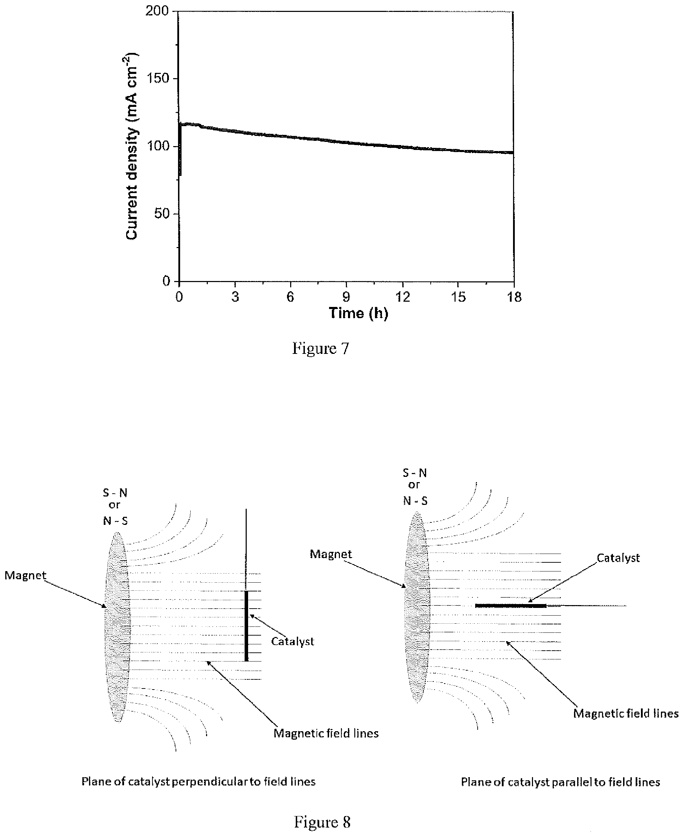

For a plate-like catalyst with small thickness, the contact area with the magnetic field lines is much bigger for the plate-face than for the plate-side section (see figure 8). A magnetic field with field lines which run perpendicular to and through the surface (left side of figure 8) of the plate polarize the spins of the electrons in the catalyst and induce them to point to the electrolyte. This means that at least a substantial proportion (i.e. more than 50%) of the magnetic field lines which emerge from either the north or the south pole of the magnet are directed to the surface of the catalyst at an angle of 30-90°, preferably 60-90°, more preferred 80-90° and most preferred 90°. This results in a much higher transfer probability of electrons to the surface adsorbates (like HO* or O*) and as a consequence to higher catalytic efficiency. Thus, in a preferred embodiment of the invention the magnetic field is oriented such that the magnetic field lines run at least not parallel but preferably perpendicular to and through the plate surface of the catalyst (see figure 8, left side).

As mentioned above the present method of increasing the electrochemical activity of catalysts for the Oxygen Evolution Reactions (OER) is applicable to materials with the property to increase a non-zero Berry phase under the influence of a magnetic field. Preferably to materials which have a non-zero Berry phase at room temperature (25°C). More preferably to metals, intermetallic compounds, metal oxides, metal sulfides, metal carbides and alloys, preferably Heusler alloys, in an electrochemical cell having a cathode, an anodic working electrode, and a low constant external magnetic field that surrounds the cell and the anodic working electrode.

In a preferred embodiment the metals are selected from the group consisting of Cr, Mn, Fe, Ni, and Co.

In a further preferred embodiment, the intermetallic compounds are selected from the group consisting of materials comprising two or more elemental metals of defined proportions ($x$ and $y$) which exhibit a room temperature non-zero Berry phase. Preferred binary phase intermetallic compounds are those of the formula $A_xB_y$, wherein A = Fe, Co, or Ni, and B is selected from the group consisting of transition metals and $x$ and $y$ independently from one another represent an integer from 1 to 8. Typical binary phase intermetallic compounds which can be used in the present invention are $Fe_3Cr$, $Fe_3Ga_4$, $Fe_3Pt$, FeRh, CoGa, CoPt, $Co_3Ti$, $Ni_3Fe$, $Ni_3Mn$, NiPt, etc.

In another preferred embodiment the metal oxides are selected from the group consisting of compounds comprising oxygen and one or more metallic elements. Binary metal oxides preferably have the formula $T_xO_y$, wherein T is selected from the group consisting of transition metals. Ternary metal oxides have the formula $T_xT'_{1-x}O_y$ wherein T and T' are independently selected from the group consisting of transition metals. $x$ and $y$ in both, the binary and the ternary oxides, independently from one another represent an integer from 1 to 8 in the above formulae. All of these metal oxides exhibit a non-zero Berry Phase at the working temperature of the OER-cell. Typical metal oxide compounds which can be used in the present invention are $Fe_3O_4$, $Fe_2O_3$, NiO, $Co_3O_4$, $MnFe_2O_4$, $CoFe_2O_4$, $NiFe_2O_4$, etc.

In another preferred embodiment the metal sulfides are selected from the group consisting of compounds comprising sulfur and one or more metallic elements. Binary metal sulfides have the formula $T_xS_y$, wherein T is selected from the group consisting of transition metals; ternary metal sulfides have the formula $T_xT'_{1-x}S_y$, wherein T and T' are selected from the group consisting of transition metals. $x$ and $y$, in both, the binary and the ternary sulfides, independently from one another represent an integer from 1 to 8 in the above formulae. All of these metal sulfides exhibit a non-zero Berry Phase at the working temperature of the OER-cell. Typical metal sulfide compounds which can be used in the present invention are $Fe_3S_4$, $Fe_7S_8$, $Ni_3S_4$, $Co_3S_4$, $NiFe_2S_4$, $ZnFe_2S_4$, $NiFeZnS_4$, etc.

In another preferred embodiment the metal carbide is selected from the group consisting of compounds comprising carbon and one or more transition metal elements. Preferably binary metal carbides have the formula $T_xC_y$, wherein T is selected from the group consisting of transition, $x$ and $y$ independently from one another represent an integer from 1 to 5. All of these metal carbides exhibit a non-zero Berry Phase at the working temperature of the OER-cell. More preferably the metal carbide is selected from one or more compounds selected from $Fe_2C$, $Fe_5C_2$, $Fe_3C$, $Co_3C$, and NiC.

In another preferred embodiment the Heusler alloys have a composition of TT'Z (half-Heusler) or $T_2T'R$ (full-Heusler), wherein T and T' are selected from the group consisting of transition metals, and R is in element from IUPAC group 13, 14 or 15. All of these metal alloys exhibit a non-zero Berry Phase at the working temperature of the OER-cell. Typical Heusler alloys that can be used in the present invention are $Mn_2NiSb$, $Ni_2MnGa$, $Co_2MnGa$, $Cu_2MnSb$, NiCrSi, NiCrGe, NiCrGa, etc.

It was very surprising that the increase in electrochemical activity occurred already at a constant magnetic field strength as low as ≤ 200 mT. It was believed that the increase of OER activity by a constant magnetic field is a result of the Magneto Hydrodynamic Effects (MHD). This would imply that the bigger the applied magnetic field, the faster of desorption of oxygen bubbles and also the transport of oxygen radicals to the surface of the catalyst. Accordingly, it was assumed that an increase in magnetic field strength inevitably goes along with an increase in OER activity. Surprisingly, the catalysts defined and selected in the present invention work even better at lower magnetic field strength, e.g. at 200 mT, which is against all previous understanding. Without wishing to be bound by this theory it is believed that this is caused by modifying the spin structure of the catalysts, rather than the oxygen bubbles and solution. Catalysts with unfilled $e_g$ orbitals have unpaired electrons, the spin orientation of which can easily be controlled by a small magnetic field, even as lower as 200 mT and lower.

The magnetic field strength in the present invention can be varied e.g. by varying the distance of the catalyst from a permanent magnet as shown in figure 2 or by using an electromagnet with variable but constant magnetic field strength. The magnetic field strength at a given distance can be measured with a magnetometer.

**EXAMPLES**

The invention is explained in more detail below with reference to examples.

Catalytic measurement method

The OER catalytic measurements were performed on an Autolab PGSTAT302N electrochemistry workstation with an impedance module (Metrohm Autolab, B.V. Utrecht, The Netherlands). A conventional three electrode cell configuration was used in the measurement. An Ag/AgCl (3 M KCl) electrode was used as reference electrode, and a graphite rod was used as the counter electrode. The Ni foam with loaded electrocatalysts was attached to a Ti-plate and served as working electrode. The electrolyte was an Ar saturated 1 M KOH solution. Linear sweep voltammograms were recorded with a scan rate of 5 mV / S. All potentials used in this work were referenced to a reverse hydrogen electrode (RHE).

The experiment setup is shown in Figure 1 and consists of a counter electrode (1), reference electrode (2), OER catalyst (3) and a permanent magnet (4). The permanent magnet (4) was placed in line with the glass reaction vessel facing the electrocatalyst. The applied magnetic field strength on the electrocatalyst can be controlled by the distance between the magnet and the catalyst.

Figure 1 shows the electrochemical setup for OER in the presence of an external magnetic field. The magnetic field is perpendicular to the catalyst surface. Thus, the whole catalyst is submerged in a homogeneous magnetic field.

Figure 2 shows the distance depended magnetic field strength of the used magnet. The distance is defined as the length between the surface of the magnet and the surface of the catalyst. From the distance, one can determine the applied magnetic field strength on the catalyst with the graph of figure 2.

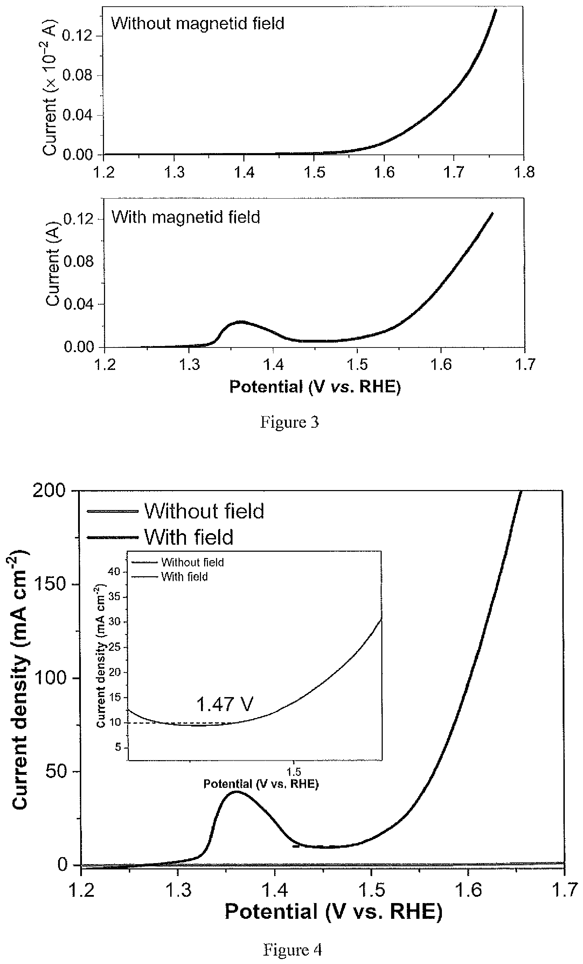

Figure 3 shows the linear sweep voltammogram (LSV) OER curves of Ni foam with and without the application of an external magnetic field. The y-axis represents the absolute OER current of the Ni foam.

Figure 4 shows the linear LSV curves of Ni foam with and without the application of an external magnetic field. The y-axis represents the current density. This is commonly used to evaluate the OER performance of electrocatalysts.

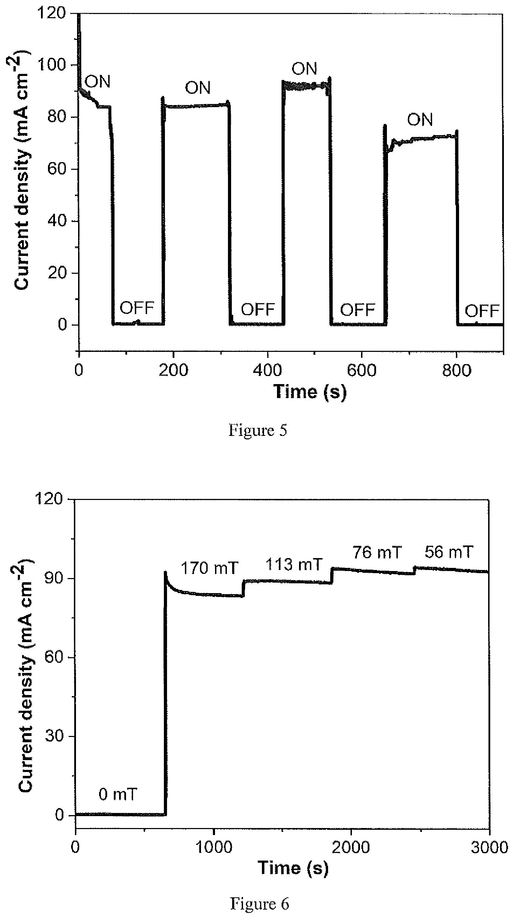

Figure 5 shows the Galvanostatic (constant potential) measurement of electrochemical activity of Ni foam with and without an external magnetic field.

Figure 6 shows the distance dependent Galvanostatic (constant potential) measurement of electrochemical activity of Ni foam in the presence of an external magnetic field.

Figure 7 shows the stability test of Ni foam in the presence of an external magnetic field.

Figure 8 shows the magnetic field lines with reference to the surface of the catalyst plate; on the left side the field lines are oriented perpendicular to the plate face of the catalyst (=preferred embodiment) and on the right side the field lines are oriented parallel to the plate face of the catalyst.

**Claims**

1.  A process for enhancing the catalytic efficiency of a catalyst for the oxygen evolution reaction (OER), comprising exposing the catalyst to an external magnetic field of between $65 \times 10^{-6}$ mT and $\leq 200$ mT during the oxygen evolution reaction, wherein the catalyst is a material which exhibits an increased Berry phase induced by the exposure of the catalyst to the external magnetic field.

2.  The process of claim 1, wherein the catalyst exhibits a non-zero Berry phase at the operating temperature of the OER cell.

3.  The process of claim 1 or 2, wherein the catalyst exhibits a non-zero Berry phase at room temperature (25 °C).

4. The process of one of claims 1 to 3, wherein the catalyst is a metal, metal oxide, metal sulfide, carbide, or Heusler alloy.

5. The process of claim 4, wherein the metal is selected from the group consisting of Cr, Mn, Fe, Co and Ni, preferably Fe, Co or Ni..

6. The process of claim 4, wherein the metal oxide is selected from the group consisting of compounds comprising oxygen and one or more metallic elements, preferably

   - binary metal oxides having the formula $T_xO_y$, wherein T is selected from the group consisting of transition metals, and/or
   - ternary metal oxides having the formula $T_xT'_{1-x}O_y$, wherein T and T' are independently selected from the group consisting of transition metals; and
   - wherein *x* and *y* independently from one another represent an integer from 1 to 8,

   more preferably wherein the metal oxide compound is selected from one or more of $Fe_3O_4$, $Fe_2O_3$, NiO, $Co_3O_4$, $MnFe_2O_4$, $CoFe_2O_4$ and $NiFe_2O_4$.

7. The process of claim 4, wherein the metal sulfide is selected from the group consisting of compounds comprising sulfur and one or more metallic elements, preferably

   - binary metal sulfides having the formula $T_xS_y$, wherein T is selected from the group consisting of transition metals; and/or
   - ternary metal sulfides have the formula $T_xT'_{1-x}S_y$, wherein T and T' are selected from the group consisting of transition metals; and
   - wherein *x* and *y* independently from one another represent an integer from 1 to 8,

   more preferably wherein the metal sulfide is selected from one or more of $Fe_3S_4$, $Fe_7S_8$, $Ni_3S_4$, $Co_3S_4$, $NiFe_2S_4$, $ZnFe_2S_4$ and $NiFeZnS_4$.

8. The process of claim 4, wherein the metal carbide is selected from the group consisting of compounds comprising carbon and one or more metallic elements, preferably

   - binary metal carbides having the formula of $T_xC_y$, wherein T is selected from the group consisting of transition metals; and
   - *x* and *y* independently from one another represent an integer from 1 to 5;

   more preferably wherein the metal carbide is selected from one or more compounds selected from $Fe_2C$, $Fe_5C_2$, $Fe_3C$, $Co_3C$, and NiC.

9. The process of claim 4, wherein the Heusler alloy has a composition of TT'Z (half-Heusler) or $T_2T'R$ (full-Heusler), wherein T and T' are selected from the group consisting of transition metals, and R is an element from IUPAC group 13, 14 or 15, more preferably the Heusler alloy is selected from one or more of $Mn_2NiSb$, $Ni_2MnGa$, $Co_2MnGa$, $Cu_2MnSb$, NiCrSi, NiCrGe and NiCrGa.

10. The process of one of claims 1-9, wherein the catalyst has a plate-like form, which has a planar surface.

11. The process of one of claim 10, wherein the magnetic field which is applied to the plate-like catalyst has field lines, and the magnetic field is arranged such that the field lines run at least not parallel but preferably perpendicular to and through the planar surface of the plate-like catalyst.

12. Use of an external magnetic field of $\leq$ 200 mT for increasing the efficiency of an OER.

13. Use of a material which exhibits an increased Berry phase in an OER under the influence of an external magnetic field of $\leq$ 200 mT.

Figure 1

Figure 2

Figure 3

Figure 4

Figure 5

Figure 6

Figure 7

Plane of catalyst perpendicular to field lines

Plane of catalyst parallel to field lines

Figure 8

Europäisches
Patentamt

European
Patent Office

Office européen
des brevets

# EUROPEAN SEARCH REPORT

Application Number

EP 19 19 9561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 594 098 A (UNIV HUNAN) 9 April 2019 (2019-04-09) * the whole document * | 1-13 | INV. C25B1/04 C25B11/04 |
| X | GARCÉS-PINEDA FELIPE A ET AL: "Direct magnetic enhancement of electrocatalytic water oxidation in alkaline media", NATURE ENERGY, NATURE PUBLISHING GROUP UK, LONDON, vol. 4, no. 6, 10 June 2019 (2019-06-10), pages 519-525, XP036805831, DOI: 10.1038/S41560-019-0404-4 [retrieved on 2019-06-10] * abstract; figures 1-4 * * Sections: Magnetic field effect, Magnetic enhancement at high current densities, Conclusion, Methods * | 1-13 | |
| A | CN 108 435 211 A (UNIV SICHUAN SCI & ENG) 24 August 2018 (2018-08-24) * the whole document * | 1-13 | |
| A | WO 2019/152468 A2 (UNIV NORTHWESTERN [US]) 8 August 2019 (2019-08-08) * the whole document * | 1-13 | TECHNICAL FIELDS SEARCHED (IPC) C25B |
| A | CN 108 823 600 A (UNIV JILIN) 16 November 2018 (2018-11-16) * the whole document * | 1-13 | |

The present search report has been drawn up for all claims

| Place of search | Date of completion of the search | Examiner |
|---|---|---|
| Munich | 25 March 2020 | Leu, Oana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 9561

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2020

| Patent document cited in search report | | Publication date | Patent family member(s) | Publication date |
|---|---|---|---|---|
| CN 109594098 | A | 09-04-2019 | NONE | |
| CN 108435211 | A | 24-08-2018 | NONE | |
| WO 2019152468 | A2 | 08-08-2019 | NONE | |
| CN 108823600 | A | 16-11-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 101566458 B1
- CN 105256331 B
- US 7632390 B2

### Non-patent literature cited in the description

- **NOBUKO I. WAKAYAMA ; TATSUHIRO OKADA ; JUN-ICHI OKANO ; TAKEO OZAWA.** *Jpn. J. Appl. Phys.,* 2011, vol. 40, L269-271
- **CHRISTIANE NIETHER ; STÉPHANE FAURE ; ALEXIS BORDET ; JONATHAN DESEURE ; MARIAN CHATENET.** *Nat. Energy,* 2018, vol. 3, 476-483
- **FELIPE A. GARCÉS-PINEDAL ; MARTA BLASCO-AHICART ; DAVID NIETO-CASTRO ; NÚRIA LÓPEZ ; JOSE RAMÓN GALÁN-MASCARÓS.** *Nat. Energy,* 2019, vol. 4, 519-525